# EUROPEAN PATENT APPLICATION

(11) **EP 3 287 010 A1**
(43) Date of publication of application: **28.02.2018**
(21) Application number: 15846615.1
(22) Date of filing: 01.10.2015
(51) Int. Cl.: A23J 3/00, A23J 3/18, A23L 7/109, A23L 17/00

(54) **COMPOSITION FOR IMPROVING FOOD-TEXTURE**

(30) Priority: 02.10.2014 JP 2014203645
(71) Applicant: Glico Nutrition Co., Ltd., Osaka-shi, Osaka 555-8502 (JP)
(72) Inventor: MIYAZAKI, Takahiro, Osaka-shi Osaka 555-8502 (JP); FUKUDA, Junya, Osaka-shi Osaka 555-8502 (JP); KITAAKI, Kouhei, Osaka-shi Osaka 555-8502 (JP)
(74) Representative: Uexküll & Stolberg
(86) International application number: PCT/JP2015/077977
(87) International publication number: WO 2016/052712

(57) **Abstract**

An object of the present invention is to provide a composition for improving food texture that can provide an egg white-like favorable texture when used as a food ingredient. A food ingredient comprising a swelling-inhibited starch and wheat protein can provide foods with an egg white-like favorable texture, and can be used as an egg-white substitute.

## Description

### Technical Field

The present invention relates to a composition for improving food texture. More specifically, the present invention relates to a composition for improving food texture that can provide a favorable texture similar to that obtained by the addition of egg whites (which may be denoted as an "egg white-like", hereinafter) when it is used as a food ingredient. The present invention also relates to foods obtained using the composition for improving food texture.

### Background Art

Conventionally, egg whites have been widely used in various processed foods such as noodles, paste products, chilled desserts, and baked confectionery, for improving the texture or quality. In particular, for noodles, egg whites are generally employed to improve the texture for enhancing palatability, or inhibit noodles from becoming soggy after boiling due to the absorption of water in the soup after being cooked. The use of egg whites, however, has problems such as the fact that eggs can be a serious allergen, the expensive cost of egg whites, and the unstable supply of egg whites. Thus, various studies have been previously made regarding egg-white substitutes that can provide an egg white-like texture.

Patent Literature 1, for example, discloses that a reduced-fat soybean protein raw material having a total content of 80% by weight or more of proteins and carbohydrates on a dry matter basis, having a fat content less than 10% by weight based on the protein content, and having a sum content of 200 mg or more of campesterol and stigmasterol as plant sterols per 100 g of fats, can be used as an egg-white substitute. Patent Literature 2 discloses that a coagulating egg white-like composition comprising a thermally coagulating protein and starch can be used as a coagulating egg-white substitute having a texture like the egg white portion of a boiled egg. Patent Literature 3 discloses that noodles can be inhibited from becoming soggy after boiling, by blending noodles with a specific proportion of powder of dry konjac, or powder of dry konjac and a partial degradation product of grain protein having a specific molecular weight distribution.

The egg-white substitutes proposed in Patent Literatures 1 and 2, however, when used in noodles, have a drawback in that, although they can provide an elasticity relatively close to a texture characteristic to egg whites immediately after boiling of the noodles, they cannot provide the noodles with flexibility and smoothness to offer a satisfactory texture. Moreover, the noodles obtained by adding the egg-white substitutes proposed in Patent Literatures 1 and 2 have an additional drawback in that the noodles cannot be sufficiently inhibited from becoming soggy after boiling. Furthermore, although the technique described in Patent Literature 3 is recognized to have an effect of inhibiting sogginess after boiling, it provides a gel texture characteristic to the konjac powder, rather than an egg white-like texture, and thus, cannot be defined as an egg-white substitute. The technique of Patent Literature 3 additionally has the drawback of very high raw material costs.

The previously reported egg-white substitutes, therefore, are not satisfactory in terms of texture, and require further improvements.

### Citation List

### Patent Literature

Patent Literature 1: JP 2012-249618 A
Patent Literature 2: JP 2004-147536 A
Patent Literature 3: JP 2000-189088 A

### Summary of Invention

### Technical Problem

An object of the present invention is to provide a composition for improving food texture that can provide an egg white-like favorable texture when used as a food ingredient. Another object of the present invention is to provide a food having an egg white-like favorable texture.

### Solution to Problem

The present inventor conducted extensive research to solve the aforementioned problem, and found that a food ingredient comprising a swelling-inhibited starch and wheat protein can provide foods with an egg white-like favorable texture, and can be used as an egg-white substitute. In particular, when the swelling-inhibited starch and wheat protein are added into noodles, they can provide the noodles with an egg white-like texture, as well as inhibit the noodles from becoming soggy after boiling. The present invention was completed by conducting further research based on this finding.

In summary, the present invention provides the following aspects of invention.
Item 1. A composition for improving food texture comprising a swelling-inhibited starch and wheat protein.
Item 2. The composition for improving food texture according to item 1, wherein the swelling-inhibited starch is a crosslinked starch and/or a heat-moisture-treated starch.
Item 3. The composition for improving food texture according to item 1 or 2, wherein the swelling-inhibited starch is a phosphate-crosslinked starch.
Item 4. The composition for improving food texture according to any of items 1 to 3, wherein the swelling-inhibited starch is a phosphate-crosslinked starch that has undergone an enzymatic degradation treatment.
Item 5. The composition for improving food texture according to any of items 1 to 4, wherein the wheat protein is vital gluten obtained using spray drying and/or flash drying.
Item 6. The composition for improving food texture according to any of items 1 to 5, which comprises 0.5 to 99.5 parts by weight of the wheat protein per 100 parts by weight of the swelling-inhibited starch.
Item 7. The composition for improving food texture according to any of items 1 to 6, which is used for improving the texture of noodles, a seafood paste product, or a meat paste product.
Item 8. A food comprising a swelling-inhibited starch and wheat protein.
Item 9. The food according to item 8, which is noodles, a seafood paste product, or a meat paste product.
Item 10. Use of a food ingredient comprising a swelling-inhibited starch and wheat protein, for improving food texture.

### Advantageous Effects of Invention

In accordance with the present invention, the use of the swelling-inhibited starch and wheat protein in combination can provide foods with a favorable texture similar to that obtained by the addition of egg whites (which may be denoted as an "egg white-like", hereinafter). In particular, when the swelling-inhibited starch and wheat protein are added into noodles, they can provide the noodles with favorable textures such as elasticity, flexibility, and smoothness, as with the texture obtained by the addition of egg whites, and can inhibit the noodles from becoming soggy after boiling. Moreover, when the swelling-inhibited starch and wheat protein are added into a seafood paste product, they can provide the seafood paste product with an excellent elasticity, and can inhibit the adhesion thereof into the mouth during mastication. Furthermore, when the swelling-inhibited starch and wheat protein are added into a meat paste product, they can provide the meat paste product with an excellent elasticity, as well as good surface hardness.

### Description of Embodiments

### 1. Composition for Improving Food Texture

The composition for improving food texture of the present invention comprises a swelling-inhibited starch and wheat protein. The composition for improving food texture of the present invention will be described hereinafter in detail.

### Swelling-Inhibited Starch

The composition for improving food texture of the present invention comprises a swelling-inhibited starch. The swelling-inhibited starch is a modified starch that has been processed such that swelling of starch particles is inhibited during heating of the starch (which may be denoted as a "swelling-inhibiting treatment", hereinafter).

While the swelling-inhibited starch used in the present invention is not particularly limited in type, examples thereof include crosslinked starches, heat-moisture-treated starches, and thermal inhibition-treated starches. In the present invention, a swelling-inhibited starch that has undergone two or more treatments of a crosslinking treatment, a heat-moisture treatment, and a thermal inhibition treatment may be used.

A crosslinked starch refers to a modified starch crosslinked via two or more hydroxyl groups in the starch, using a crosslinking agent. While the crosslinked starch used in the present invention is not particularly limited in type as long as it can be used as a food ingredient, examples thereof include phosphate-crosslinked starches and dicarboxylic acid-crosslinked starches.

A phosphate-crosslinked starch can be obtained by subjecting starch to a crosslinking treatment using a crosslinking agent such as a trimetaphosphate or phosphorus oxychloride. A preferred example among phosphate-crosslinked starches is a phosphate-crosslinked starch that has undergone a crosslinking treatment with a trimetaphosphate.

A dicarboxylic acid-crosslinked starch can be similarly obtained by subjecting starch to a crosslinking treatment using a dicarboxylic acid such as adipic acid as a crosslinking agent.

The crosslinked starch may undergo a chemical treatment other than the crosslinking treatment, as long as it can be used as a food ingredient. Examples of such chemical treatments include oxidation; esterification such as acetylation or phosphorylation; and etherification such as hydroxypropylation. Of these chemical treatments, a single treatment may be applied alone, or two or more treatments may be applied in combination. Specific examples of crosslinked starches that have undergone such chemical treatments include acetylated distarch phosphate, hydroxypropyl distarch phosphate, phosphated distarch phosphate, and acetylated distarch adipate.

These crosslinked starches may be used alone or in combination of two or more.

A heat-moisture-treated starch refers to a modified starch obtained by heat-treating starch at a low moisture level such that the starch is not gelatinized. The phrase "a low moisture level such that the starch is not gelatinized" specifically means, for example, that the moisture content is approximately 50% by weight or less, preferably approximately 5 to 30% by weight or less, more preferably approximately 5 to 25% by weight, and still more preferably approximately 5 to 20% by weight.

The heat-moisture-treated starch may be produced by, for example, a method that involves adjusting the moisture content of the starch in the above-mentioned range, and then heating the starch at approximately 90 to 125 °C for approximately 0.5 to 20 hours, although the method is not particularly limited thereto. Heating is preferably performed at a relative humidity of about 100% within a hermetically sealed vessel. A heat-moisture-treated starch in which swelling is more inhibited can be obtained as the moisture content during the production of the heat-moisture-treated starch increases, the heating temperature becomes higher, and the heating time becomes longer.

A thermal inhibition-treated starch refers to a modified starch whose crystal structure has been reinforced by subjecting starch granules dried to a very low moisture level, to a dry heat treatment. The phrase "starch granules dried to a very low moisture level" specifically means, for example, that the moisture content of the starch granules is approximately 1% or less, and preferably approximately 0%.

The "starch granules dried to a very low moisture level" may be produced by, for example, a method that involves adjusting the pH of the starch granules to 7.0 or more, and preferably 7.0 to 10.5, and then dehydrating the starch granules until the moisture content decreases in the above-mentioned range, although the method is not particularly limited thereto. The dehydration may be thermal dehydration or non-thermal dehydration. Exemplary conditions for the dry heat treatment are approximately 3 to 20 hours at approximately 100 to 200 °C, for example, although not particularly limited thereto. The extent of the inhibition of swelling of the thermal inhibition-treated starch is dependent upon the pH, heating temperature, and heating time of the starch granules during the dry heat treatment; a thermal inhibition-treated starch in which swelling is more inhibited can be obtained as the pH becomes higher, the heat treatment temperature becomes higher, and the heat treatment time becomes longer.

The swelling-inhibited starch used in the present invention may also be a swelling-inhibited starch that has undergone a hydrolysis treatment. By thus applying a hydrolysis treatment, the swelling-inhibiting effect for the swelling-inhibited starch can be enhanced, such that when the composition for improving food texture of the present invention is added into noodles, it can inhibit the noodles from becoming soggy after boiling even more effectively. In the production of the swelling-inhibited starch that has undergone a hydrolysis treatment, the hydrolysis treatment may be performed either before or after the swelling-inhibiting treatment (including a crosslinking treatment and a heat-moisture treatment), and is preferably performed after the swelling-inhibiting treatment of the starch. The extent of the hydrolysis treatment may preferably be such an extent as to give a degradation ratio of 1 to 30%, for example, preferably 3 to 25%, and more preferably 5 to 20%, although not particularly limited thereto. The term "degradation ratio" as used herein refers to the ratio (%) of the weight of reducing sugars released by hydrolysis, relative to the weight of the swelling-inhibited starch or its raw material starch that undergoes the hydrolysis treatment. The weight of reducing sugars released by hydrolysis can be determined by centrifuging (3000 rpm, 5 min) a suspension of the swelling-inhibited starch or its raw material starch after hydrolysis, and measuring the amount of released reducing sugars contained in the supernatant by using the phenol-sulfate method.

Examples of methods of the above-described hydrolysis treatment include, but are not particularly limited to, enzymatic degradation and acidic hydrolysis. Of these hydrolysis treatments, a preferred example is enzymatic degradation. With regard to the type of the enzyme to be used for the enzymatic degradation, amylolytic enzymes such as α-amylase, β-amylase, and amyloglucosidase can be used, for example, whether they are in endo- or exo-forms.

While the starch serving as the raw material of the swelling-inhibited starch used in the present invention is not particularly limited in type, examples thereof include tapioca starch, wheat starch, potato starch, corn starch, rice starch, sago starch, waxy corn starch, high amylose corn starch, and mung bean starch. These starches may be used alone or in combination of two or more. Of these starches, preferred examples are tapioca starch, wheat starch, potato starch, and corn starch, and more preferred examples are tapioca starch and wheat starch.

Furthermore, the swelling properties of the swelling-inhibited starch used in the present invention may be such that the degree of swelling measured under the test conditions described below is 40 or less, preferably 3 to 30, and more preferably 5 to 15, although not particularly limited thereto, from the viewpoint of providing an egg white-like texture that is even more favorable, and inhibiting noodles from becoming soggy after boiling even more effectively when used in noodles.

### <Conditions for Testing the Degree of Swelling>

(1) Add ion-exchange water to 1 g of the swelling-inhibited starch calculated on a dry weight basis to give a total amount of 100 g, and stir.
(2) After stirring, heat the suspension at 90 °C for 30 minutes, and then cool to 30 °C in an atmosphere at 25 °C.
(3) After cooling to 30 °C, centrifuge the suspension at 3000 rpm for 10 minutes, discard the supernatant, collect a sedimented gel portion, and measure the weight (hereinafter denoted as the "weight A").
(4) Directly evaporate the collected gel portion to dryness at 105 °C, and measure the weight after evaporation to dryness (hereinafter denoted as the "weight B").
(5) Calculate the degree of swelling by dividing the weight A by the weight B.

In the composition for improving food texture of the present invention, these swelling-inhibited starches may be used alone or in combination of two or more.

Of these swelling-inhibited starches, preferred examples are a crosslinked starch and a heat-moisture-treated starch, a more preferred example is a crosslinked starch, a still more preferred example is a phosphate-crosslinked starch, and a particularly preferred example is a phosphate-crosslinked starch that has undergone an enzymatic degradation treatment, from the viewpoint of providing an egg white-like texture that is even more favorable, and inhibiting noodles from becoming soggy after boiling even more effectively when used in noodles.

### Wheat Protein

The composition for improving food texture of the present invention comprises wheat protein together with the above-described swelling-inhibited starch. By thus using the swelling-inhibited starch and wheat protein in combination, an egg white-like favorable texture can be provided, and when they are used in noodles, the noodles can be inhibited from becoming soggy after boiling.

Wheat protein, which is also referred to as wheat gluten, can be obtained by making a dough by adding water to flour and kneading, and washing away the starch while washing this dough with water.

The wheat protein used in the present invention may be in the form of either vital gluten prepared in a dry form or raw gluten containing moisture; however, a preferred example is vital gluten, from the viewpoint of providing an egg white-like texture that is even more favorable, and inhibiting noodles from becoming soggy after boiling even more effectively when used in noodles.

Vital gluten can be obtained by subjecting raw gluten to a drying treatment. Examples of methods of subjecting raw gluten to the drying treatment include, but are not particularly limited to, spray drying, flash drying, vacuum drying, and freeze drying.

A method of obtaining vital gluten using spray drying specifically involves adding an acid or alkali to raw gluten to adjust the pH to prepare a dispersion with low viscosity, and spraying the dispersion into high-temperature air for instantaneous drying. A method of obtaining vital gluten using flash drying specifically involves mixing dusting flour (vital gluten, for example) into raw gluten that is being cut to adjust the moisture content, followed by drying in an air current. A method of obtaining vital gluten using vacuum drying specifically involves drying raw gluten in a vacuum atmosphere at low temperatures. A method of obtaining vital gluten using freeze drying specifically involves subjecting raw gluten in a frozen state to a vacuum.

Of these types of wheat protein, a preferred example is vital gluten produced using spray drying or flash drying, and a more preferred example is vital gluten produced using spray drying, from the viewpoint of providing an egg white-like texture that is even more favorable, and inhibiting noodles from becoming soggy after boiling even more effectively when used in noodles.

A suitable example of the wheat protein used in the present invention is wheat protein that exhibits a consistency peak arrival time within 60 minutes, preferably within 30 minutes, more preferably within 10 minutes, and particularly preferably within 5 minutes, in the mixograph test described below.

### <Conditions for Testing Consistency Peak Arrival Time>

Ten parts by weight of the wheat protein to be measured, 20 parts by weight of wheat starch acetate (degree of substitution (DS): 0.02), and 28 parts by weight of water (15 °C) are kneaded at a temperature of 25 °C, using a 35-g mixograph (stirring-type viscoelasticity-measuring apparatus), based on the AACC method 54-40.02 defined by AACC (American Association of Cereal Chemists), and the consistency is measured with time. The time until a consistency peak is reached is determined as the consistency peak arrival time.

### Proportion between the Swelling-Inhibited Starch and the Wheat Protein

While the proportion between the swelling-inhibited starch and the wheat protein is not particularly limited in the composition for improving food texture of the present invention, it may be such that the proportion of the wheat protein is 0.5 to 99.5 parts by weight, for example, per 100 parts by weight of the swelling-inhibited starch. The proportion of the wheat protein is preferably 10 to 70 parts by weight, and more preferably 25 to 50 parts by weight, per 100 parts by weight of the swelling-inhibited starch, from the viewpoint of providing an egg white-like texture that is even more favorable, and inhibiting noodles from becoming soggy after boiling even more effectively when used in noodles.

In the composition for improving food texture of the present invention, the contents of the swelling-inhibited starch and the wheat protein may be set as appropriate, in accordance with the above-mentioned proportion, the contents of other components described below, and the like. For example, in the composition for improving food texture of the present invention, the total content of the swelling-inhibited starch and the wheat protein may be set to 1 to 100% by weight, preferably 40 to 100% by weight, and more preferably 80 to 100% by weight.

### Other Components

The composition for improving food texture of the present invention may contain other components, as required, in addition to the swelling-inhibited starch and the wheat protein, without interfering with the effects of the present invention. While such components are not particularly limited as long as they can be used as food ingredients, examples thereof include water, fats and oils, saccharides, proteins other than wheat protein, starches, modified starches other than the swelling-inhibited starch, grain flour, minerals, emulsifiers, flavors, dyes, salt, thickeners, gelling agents, seasonings, and spices.

### Use

The composition for improving food texture of the present invention is used as a food ingredient for providing foods with an egg white-like texture.

The composition for improving food texture of the present invention may be added as a substitute for egg whites, or may be added in combination with egg whites, into foods containing egg whites.

Foods to which the composition for improving food texture of the present invention is added may be any foods that need to have an egg white-like texture, and are not particularly limited in type. Examples of such foods include noodles such as *udon* noodles (Japanese noodles made of wheat flour), buckwheat noodles, *hiyamugi* noodles (chilled thin wheat noodles), *somen* noodles (thin wheat noodles), Chinese noodles, pasta, spaghetti, and macaroni; seafood paste products such as *kamaboko* (boiled fish pastes), fish meat sausages, fish meat ham, fish meat *surimi* (fish meat pastes), *chikuwa* (fishcake tubes), *hanpen* (boiled *kamaboko* of *surimi* and yam paste), and *satsuma-age* (deep fried *kamaboko*); meat paste products such as nuggets, ham, Vienna sausages, sausages, bacon, Hamburg steak, roast pork, pork cutlet, and fried chicken; egg processed foods such as *chawan-mushi* (steamed egg custard), *tamago-dofu* (steamed beaten egg with soup stock), *tamago-yaki* (omelets), *dashimaki* (omelets with stock), and sesame *tofu;* confectionery such as biscuits, cookies, crackers, *okaki* (sliced and dried rice cake), *senbei* (rice crackers), and puffed snacks; dressing, mayonnaise; and the like.

Of these foods, preferred examples are noodles, seafood paste products, and meat paste products. In particular, when the composition for improving food texture of the present invention is added into noodles, it can provide the noodles with textures such as an excellent elasticity, flexibility, and smoothness, as well as inhibit the noodles from becoming soggy after boiling. Moreover, when the composition for improving food texture of the present invention is added into a seafood paste product, it can provide the seafood paste product with an excellent texture in terms of elasticity, inhibition of adhesion into the mouth during mastication, and the like. Furthermore, when the composition for improving food texture of the present invention is added into a meat paste product, it can provide the meat paste product with an excellent elasticity, as well as good surface hardness.

The amount of the composition for improving food texture of the present invention to be added into a food may be set as appropriate, depending on the type of the food. For example, the amount of the composition for improving food texture of the present invention to be added may be such that the total content of the swelling-inhibited starch and the wheat protein is 0.1 to 40% by weight, preferably 1 to 40% by weight, and more preferably 3 to 40% by weight.

### 2. Foods

The food of the present invention comprises a swelling-inhibited starch and wheat protein. As described above, the food can be provided with an egg white-like favorable texture, by the inclusion of the swelling-inhibited starch and the wheat protein. Particularly in the case of noodles, the noodles can be inhibited from becoming soggy after boiling, as well as being provided with an egg white-like texture. Moreover, in the case of a seafood paste product, in addition to being provided with a favorable elasticity, the seafood paste product can be inhibited from adhering into the mouth during mastication, and provided with a favorable texture. Furthermore, in the case of a meat paste product, the meat paste product can be provided with an excellent elasticity, as well as good surface hardness.

The food of the present invention can be obtained by producing a food by adding the above-described composition for improving food texture as a food ingredient. Alternatively, the food of the present invention can be obtained by producing a food by adding the swelling-inhibited starch and the wheat protein separately as food ingredients.

In the food of the present invention, the types or proportions of the composition for improving food texture and the wheat protein used, the type of the food, the contents of the composition for improving food texture and the wheat protein in the food, and the like are as set forth in the "1. Composition for Improving Food Texture" section above.

### Examples

The present invention will be hereinafter described with reference to examples; however, the invention is not limited to these examples.

### 1. Production of Swelling-Inhibited Starches and Non-Swelling-Inhibited Starches as well as Measurement of Degrees of Swelling

### 1-1. Production of Swelling-Inhibited Starches and Non-Swelling-Inhibited Starches

### Swelling-Inhibited Starch 1

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 0.35 g (0.05% by weight based on the starch) of sodium trimetaphosphate was added and reacted with stirring at 40 °C for 4 hours. After the reaction, the suspension was adjusted to pH 5.5, and the reaction was stopped. After the completion of the reaction, the suspension was filtered by centrifugation and dried by blowing air, and a swelling-inhibited starch 1 (phosphate-crosslinked starch) was collected.

### Swelling-Inhibited Starch 2

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 1.4 g (0.2% by weight based on the starch) of sodium trimetaphosphate was added and reacted with stirring at 40 °C for 4 hours. After the reaction, the suspension was adjusted to pH 5.5, and the reaction was stopped. After the completion of the reaction, the suspension was filtered by centrifugation and dried by blowing air, and a swelling-inhibited starch 2 (phosphate-crosslinked starch) was collected.

### Swelling-Inhibited Starch 3

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 7.0 g (1.0% by weight based on the starch) of sodium trimetaphosphate was added and reacted with stirring at 40 °C for 4 hours. After the reaction, the suspension was adjusted to pH 5.5, and the reaction was stopped. After the completion of the reaction, the suspension was filtered by centrifugation and dried by blowing air, and a swelling-inhibited starch 3 (phosphate-crosslinked starch) was collected.

### Swelling-Inhibited Starch 4

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 0.35 g (0.05% by weight based on the starch) of sodium trimetaphosphate was added and reacted with stirring at 40°C for 4 hours. The reacted suspension was adjusted to pH 4.3, 3.5 ml (0.5% by weight based on the starch) of α-amylase ("AMYLEX A3" from *Aspergillus niger,* DANISCO; optimal pH 4.3) was added, and an enzymatic reaction was performed at 50 °C such that the degradation ratio became 10%. After the completion of the reaction, the suspension was filtered by centrifugation and dried by blowing air, and a swelling-inhibited starch 4 (enzymatically treated phosphate-crosslinked starch) was collected.

### Swelling-Inhibited Starch 5

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 1.4 g (0.2% by weight based on the starch) of sodium trimetaphosphate was added and reacted with stirring at 40 °C for 4 hours. The reacted suspension was adjusted to pH 4.3, 3.5 ml (0.5% by weight based on the starch) of α-amylase ("AMYLEX A3" from *Aspergillus niger,* DANISCO; optimal pH 4.3) was added, and an enzymatic reaction was performed at 50 °C such that the degradation ratio became 10%. After the completion of the reaction, the suspension was filtered by centrifugation and dried by blowing air, and a swelling-inhibited starch 5 (enzymatically treated phosphate-crosslinked starch) was collected.

### Swelling-Inhibited Starch 6

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 7.0 g (1.0% by weight based on the starch) of sodium trimetaphosphate was added and reacted with stirring at 40 °C for 4 hours. The reacted suspension was adjusted to pH 4.3, 3.5 ml (0.5% by weight based on the starch) of α-amylase ("AMYLEX A3" from *Aspergillus niger,* DANISCO; optimal pH 4.3) was added, and an enzymatic reaction was performed at 50 °C such that the degradation ratio became 10%. After the completion of the reaction, the suspension was filtered by centrifugation and dried by blowing air, and a swelling-inhibited starch 6 (enzymatically treated phosphate-crosslinked starch) was collected.

### Swelling-Inhibited Starch 7

To a 700-g portion of untreated natural tapioca starch, 14 g (2.0% by weight based on the starch) of sodium chloride and 1300 g of water were added, thus preparing a starch suspension. The suspension was adjusted to pH 11.0, and then 7.0 g (1.0% by weight based on the starch) of sodium trimetaphosphate was added and reacted with stirring at 40 °C for 4 hours. The reacted suspension was adjusted to pH 4.3, 3.5 ml (0.5% by weight based on the starch) of α-amylase ("AMYLEX A3" from *Aspergillus niger,* DANISCO; optimal pH 4.3) was added, and an enzymatic reaction was performed at 50 °C such that the degradation ratio became 5%. After the completion of the reaction, the suspension was filtered by centrifugation and dried by blowing air, and a swelling-inhibited starch 7 (enzymatically treated phosphate-crosslinked starch) was collected.

### Swelling-Inhibited Starch 8

A swelling-inhibited starch 8 (enzymatically treated phosphate-crosslinked starch) was obtained under the same conditions as those used for the swelling-inhibited starch 7 described above, except that the enzymatic reaction was performed such that the degradation ratio became 15%.

### Swelling-Inhibited Starch 9

A swelling-inhibited starch 9 (enzymatically treated phosphate-crosslinked starch) was obtained under the same conditions as those used for the swelling-inhibited starch 7 described above, except that the enzymatic reaction was performed such that the degradation ratio became 20%.

### Swelling-Inhibited Starch 10

To a 700-g portion of untreated natural wheat starch, 70 g (10.0% by weight based on the starch) of sodium sulfate and 1300 g of water were added, thus preparing a starch suspension. The suspension was adjusted to pH 11.0, and then 0.7 g (0.1% by weight based on the starch) of sodium trimetaphosphate was added and reacted with stirring at 40 °C for 2 hours. After the reaction, the suspension was adjusted to pH 5.5, and the reaction was stopped. After the completion of the reaction, the suspension was filtered by centrifugation and dried by blowing air, and a swelling-inhibited starch 10 (phosphate-crosslinked starch) was collected.

### Swelling-Inhibited Starch 11

To a 700-g portion of untreated natural wheat starch, 70 g (10.0% by weight based on the starch) of sodium sulfate and 1300 g of water were added, thus preparing a starch suspension. The suspension was adjusted to pH 11.0, and then 2.8 g (0.4% by weight based on the starch) of sodium trimetaphosphate was added and reacted with stirring at 40 °C for 2 hours. After the reaction, the suspension was adjusted to pH 5.5, and the reaction was stopped. After the completion of the reaction, the suspension was filtered by centrifugation and dried by blowing air, and a swelling-inhibited starch 11 (phosphate-crosslinked starch) was collected.

### Swelling-Inhibited Starch 12

To a 700-g portion of untreated natural wheat starch, 70 g (10.0% by weight based on the starch) of sodium sulfate and 1300 g of water were added, thus preparing a starch suspension. The suspension was adjusted to pH 11.0, and then 7 g (1.0% by weight based on the starch) of sodium trimetaphosphate was added and reacted with stirring at 40 °C for 2 hours. After the reaction, the suspension was adjusted to pH 5.5, and the reaction was stopped. After the completion of the reaction, the suspension was filtered by centrifugation and dried by blowing air, and a swelling-inhibited starch 12 (phosphate-crosslinked starch) was collected.

### Swelling-Inhibited Starch 13

To a 700-g portion of untreated natural wheat starch, 70 g (10.0% by weight based on the starch) of sodium sulfate and 1300 g of water were added, thus preparing a starch suspension. The suspension was adjusted to pH 11.0, and then 2.8 g (0.4% by weight based on the starch) of sodium trimetaphosphate was added and reacted with stirring at 40 °C for 2 hours. The reacted suspension was adjusted to pH 4.3, 3.5 ml (0.5% by weight based on the starch) of amyloglucosidase ("OPTIDEX L-400" from *Aspergillus niger,* GENENCOR; optimal pH 4.3) was added, and an enzymatic reaction was performed at 50 °C such that the enzymatic degradation ratio became 10%. After the completion of the reaction, the suspension was filtered by centrifugation and dried by blowing air, and a swelling-inhibited starch 13 (enzymatically treated phosphate-crosslinked starch) was collected.

### Swelling-Inhibited Starch 14

To a 700-g portion of untreated natural wheat starch, 70 g (10.0% by weight based on the starch) of sodium sulfate and 1300 g of water were added, thus preparing a starch suspension. The suspension was adjusted to pH 11.0, and then 7 g (1.0% by weight based on the starch) of sodium trimetaphosphate was added and reacted with stirring at 40 °C for 2 hours. The reacted suspension was adjusted to pH 4.3, 3.5 ml (0.5% by weight based on the starch) of amyloglucosidase ("OPTIDEX L-400" from *Aspergillus niger,* GENENCOR; optimal pH 4.3) was added, and an enzymatic reaction was performed at 50 °C such that the enzymatic degradation ratio became 10%. After the completion of the reaction, the suspension was filtered by centrifugation and dried by blowing air, and a swelling-inhibited starch 14 (enzymatically treated phosphate-crosslinked starch) was collected.

### Swelling-Inhibited Starch 15

To a 700-g portion of untreated natural potato starch, 14 g (2.0% by weight based on the starch) of sodium chloride and 1300 g of water were added, thus preparing a starch suspension. The suspension was adjusted to pH 11.0, and then 0.49 g (0.07% by weight based on the starch) of sodium trimetaphosphate was added and reacted with stirring at 30 °C for 4 hours. After the reaction, the suspension was adjusted to pH 5.5, and the reaction was stopped. After the completion of the reaction, the suspension was filtered by centrifugation and dried by blowing air, and a swelling-inhibited starch 15 (phosphate-crosslinked starch) was collected.

### Swelling-Inhibited Starch 16

To a 700-g portion of untreated natural corn starch, 35 g (5.0% by weight based on the starch) of sodium sulfate and 1300 g of water were added, thus preparing a starch suspension. The suspension was adjusted to pH 11.0, and then 2.8 g (0.4% by weight based on the starch) of sodium trimetaphosphate was added and reacted with stirring at 30 °C for 4 hours. After the reaction, the suspension was adjusted to pH 5.5, and the reaction was stopped. After the completion of the reaction, the suspension was filtered by centrifugation and dried by blowing air, and a swelling-inhibited starch 16 (phosphate-crosslinked starch) was collected.

### Swelling-Inhibited Starch 17

Water was added to 1000 g of untreated natural tapioca starch to adjust the moisture content to 21.3% by weight. A 2-L beaker was filled with the starch suspension with minimal blank space therein, the top portion was covered with aluminum foil, and then a heat-moist treatment was performed by heating at 120°C for 15 minutes. After the completion of the heat-moist treatment, the starch suspension was dried by blowing air, and a swelling-inhibited starch 17 (heat-moisture-treated starch) was collected.

### Non-Swelling-Inhibited Starch 1

To a 700-g portion of untreated natural tapioca starch, 70 g (10% by weight based on the starch) of sodium sulfate and 1300 g of water were added, thus preparing a starch suspension. The suspension was adjusted to pH 11.0, and then 35.0 g (5.0% by weight based on the starch) of propylene oxide was added and reacted with stirring at 41 °C for 24 hours. After the reaction, the suspension was adjusted to pH 5.5, and the reaction was stopped. After the completion of the reaction, the suspension was filtered by centrifugation and dried by blowing air, and a non-swelling-inhibited starch 1 (hydroxypropylated starch) was collected.

### Non-Swelling-Inhibited Starch 2

A 1300-g portion of water was added to 700 g of untreated natural tapioca starch, thus preparing a starch suspension. The suspension was adjusted to pH 8.2, and then 49.0 g (7.0% based on the starch) of vinyl acetate monomer was added and reacted with stirring at 30 °C for 40 minutes, while maintaining the pH at 8.2 with 3% NaOH. After the reaction, the suspension was adjusted to pH 5.5, and the reaction was stopped. After the completion of the reaction, the suspension was filtered by centrifugation and dried by blowing air, and a non-swelling-inhibited starch 2 (tapioca starch acetate) was collected.

### 1-2. Measurement of Degrees of Swelling of the Swelling-Inhibited Starches and Non-Swelling-Inhibited Starches

The degree of swelling was measured for the swelling-inhibited starches and non-swelling-inhibited starches obtained above, using the following method. Initially, ion-exchange water was added to 1 g of each of the swelling-inhibited starches and non-swelling-inhibited starches to give an amount of 100 g, and stirred. After stirring, the suspension was heated at 90°C for 30 minutes, and then cooled to 30 °C in an atmosphere at 25 °C. After cooling, the suspension was centrifuged at 3000 rpm for 10 minutes, the supernatant was discarded, a sedimented gel portion was collected, and the weight (weight A) was measured. The gel portion whose weight had been measured was directly evaporated to dryness at 105 °C, and the weight after evaporation to dryness (weight B) was measured. The degree of swelling was subsequently calculated by dividing the weight A by the weight B.

### 1-3. Conditions for Producing the Swelling-Inhibited Starches and Non-Swelling-Inhibited Starches as well as Degrees of Swelling

Table 1 below shows the conditions for producing the swelling-inhibited starches and non-swelling-inhibited starches obtained above, as well as degrees of swelling thereof.

**[Table 1]**

| | Raw Material Starch | Treatment Method | Degradation Ratio | Degree of Swelling |
|---|---|---|---|---|
| Swelling-Inhibited Starch 1 | Tapioca Starch | Phosphate Crosslinking | - | 20.4 |
| Swelling-Inhibited Starch 2 | Tapioca Starch | Phosphate Crosslinking | - | 15.4 |
| Swelling-Inhibited Starch 3 | Tapioca Starch | Phosphate Crosslinking | - | 8.3 |
| Swelling-Inhibited Starch 4 | Tapioca Starch | Phosphate Crosslinking + Enzymatic Treatment | 10% | 19.6 |
| Swelling-Inhibited Starch 5 | Tapioca Starch | Phosphate Crosslinking + Enzymatic Treatment | 10% | 14.5 |
| Swelling-Inhibited Starch 6 | Tapioca Starch | Phosphate Crosslinking + Enzymatic Treatment | 10% | 7.5 |
| Swelling-Inhibited Starch 7 | Tapioca Starch | Phosphate Crosslinking + Enzymatic Treatment | 5% | 8.0 |
| Swelling-Inhibited Starch 8 | Tapioca Starch | Phosphate Crosslinking + Enzymatic Treatment | 15% | 7.7 |
| Swelling-Inhibited Starch 9 | Tapioca Starch | Phosphate Crosslinking + Enzymatic Treatment | 20% | 7.1 |
| Swelling-Inhibited Starch 10 | Wheat Starch | Phosphate Crosslinking | - | 9.9 |
| Swelling-Inhibited Starch 11 | Wheat Starch | Phosphate Crosslinking | - | 7.5 |
| Swelling-Inhibited Starch 12 | Wheat Starch | Phosphate Crosslinking | - | 6.0 |
| Swelling-Inhibited Starch 13 | Wheat Starch | Phosphate Crosslinking + Enzymatic Treatment | 10% | 7.7 |
| Swelling-Inhibited Starch 14 | Wheat Starch | Phosphate Crosslinking + Enzymatic Treatment | 10% | 5.9 |
| Swelling-Inhibited Starch 15 | Potato Starch | Phosphate Crosslinking | - | 35.7 |
| Swelling-Inhibited Starch 16 | Corn Starch | Phosphate Crosslinking | - | 10.3 |
| Swelling-Inhibited Starch 17 | Tapioca Starch | Heat-Moisture Treatment | - | 14.7 |
| Non-Swelling-Inhibited Starch 1 | Tapioca Starch | Hydroxypropylated | - | Unmeasurable |
| Non-Swelling-Inhibited Starch 2 | Tapioca Starch | Acetylated | - | Unmeasurable |

### 2. Production of Wheat Proteins and Measurement of Consistency Peak Arrival Times

### 2-1. Production of Wheat Proteins

### Production of Wheat Protein A

Ammonia solution was added to raw gluten to adjust the pH to 10.0 to 10.5 to prepare a dispersion with low viscosity, and the dispersion was sprayed into high-temperature air for instantaneous drying. In this way, a wheat protein A (vital gluten produced using the spray drying method) was collected.

### Production of Wheat Protein B

Vital gluten was mixed into raw gluten being cut to adjust the moisture content, and then dried in a hot air current. In this way, a wheat protein B (vital gluten produced using the flash drying method) was collected.

### 2-2. Measurement of Consistency Peak Arrival Times of the Wheat Proteins

A 10-g portion of the wheat protein A or B, 20 g of wheat starch acetate (degree of substitution (DS): 0.02), and 28 g of water (15 °C) were mixed at a temperature of 25 °C, using a 35-g mixograph (NATIONAL MFG Co.), based on the AACC method 54-40.02 defined by AACC, and the consistency was measured with time. The time until a consistency peak was reached was determined as the consistency peak arrival time. As a result, the wheat protein A exhibited a consistency peak arrival time of 5 minutes, and the wheat protein B exhibited a consistency peak arrival time of 10 minutes.

### 3. Evaluation of the Texture and the Effect of Inhibiting Sogginess after Boiling in Raw Chinese Noodles

Powdered ingredients were introduced into a laboratory mixer in accordance with each of the compositions shown in Tables 2 to 6, and then water was added and mixed under a reduced pressure (-700 mmHg) for 12 minutes, thus obtaining a flaky Chinese noodle dough. The dough was combined in accordance with a conventional method, compounded and rolled, and adjusted to a final noodle sheet thickness of 1.5 mm, and then the noodle sheet was cut into sliced raw noodle strings with a cutting blade (square cutter No.20). The raw noodle strings were refrigerated overnight and aged, and then boiled in a sufficient volume of boiling water for 3 minutes. The boiled noodles were placed in a container containing *ramen* (Chinese noodles) soup, and the texture of the noodles immediately after being boiled was evaluated. The texture of the noodles 8 minutes after being placed in the *ramen* soup was also evaluated as the effect of inhibiting sogginess after boiling. The texture was evaluated in accordance with the following determination criteria:

### <Criteria for Determining the Texture>

A++: excellent texture in terms of elasticity, flexibility, and smoothness.
A+: very good texture in terms of elasticity, flexibility, and smoothness.
A: good texture in terms of elasticity, flexibility, and smoothness.
B: rather good texture in terms of elasticity, flexibility, and smoothness.
C: ordinary texture in terms of elasticity, flexibility, and smoothness.
D: poor texture in terms of elasticity, flexibility, and smoothness.

The results are shown in Tables 2 to 6. The noodles containing a swelling-inhibited starch or a non-swelling-inhibited starch and whey protein (Comparative Examples 1 and 2) did not provide an adequate texture and effect of inhibiting sogginess after boiling. The noodles containing a non-swelling-inhibited starch and a wheat protein (Comparative Examples 3 and 4) did not provide a favorable texture, and also became soggy after boiling. In contrast, the noodles containing a swelling-inhibited starch and a wheat protein (Examples 1 to 22) provided a favorable texture, and were inhibited from becoming soggy after boiling. It was also revealed that the texture and the effect of inhibiting sogginess after boiling are further improved particularly in the cases using the swelling-inhibited starches subjected to a phosphate crosslinking treatment (above all, the enzymatically treated phosphate-crosslinked starches), of the swelling-inhibited starches. It was also confirmed that the texture and the effect of inhibiting sogginess after boiling are further improved in the cases using the wheat protein A (spray drying method; consistency peak arrival time: 5 minutes) of the wheat proteins.

**[Table 2]**

| | | Referential Example 1 | Examples | | | | | |
|---|---|---|---|---|---|---|---|---|
| | | | 1 | 2 | 3 | 4 | 5 | 6 |
| All-Purpose Flour | | 100 | 95 | 95 | 95 | 97.5 | 95 | 95 |
| Dry Powdered Egg Whites | | 1 | - | - | - | 0.5 | - | - |
| Swelling-Inhibited Starch 1 | | - | 5 | - | - | - | - | - |
| Swelling-Inhibited Starch 2 | | - | - | 5 | - | - | - | - |
| Swelling-Inhibited Starch 3 | | - | - | - | 5 | 2.5 | 5 | - |
| Swelling-Inhibited Starch 4 | | - | - | - | - | - | - | 5 |
| Wheat Protein A | | - | 2 | 2 | 2 | 1 | - | 2 |
| Wheat Protein B | | - | - | - | - | - | 2 | - |
| Powdered Lye | | 1 | 1 | 1 | 1 | 1 | 1 | 1 |
| Salt | | 1 | 1 | 1 | 1 | 1 | 1 | 1 |
| Water | | 31 | 32 | 32 | 32 | 31.5 | 32 | 32 |
| Evaluation Results | Texture Immediately after Boiling | A++ | B | A | A+ | A++ | A+ | A |
| | Effect of Inhibiting Sogginess after Boiling | A++ | B | B | A | A+ | B | A |

In the table, the amount of each of the components used is expressed in "part(s) by weight".

**[Table 3]**

| | | Examples | | | | | |
|---|---|---|---|---|---|---|---|
| | | 7 | 8 | 9 | 10 | 11 | 12 |
| All-Purpose Flour | | 95 | 95 | 95 | 95 | 95 | 95 |
| Dry Powdered Egg Whites | | - | - | 0.5 | - | - | - |
| Swelling-Inhibited Starch 5 | | 5 | - | - | - | - | - |
| Swelling-Inhibited Starch 6 | | - | 5 | 2.5 | 5 | - | - |
| Swelling-Inhibited Starch 7 | | - | - | - | - | 5 | - |
| Swelling-Inhibited Starch 8 | | - | - | - | - | - | 5 |
| Wheat Protein A | | 2 | 2 | 1 | - | 2 | 2 |
| Wheat Protein B | | - | - | - | 2 | - | - |
| Powdered Lye | | 1 | 1 | 1 | 1 | 1 | 1 |
| Salt | | 1 | 1 | 1 | 1 | 1 | 1 |
| Water | | 32 | 32 | 31.5 | 32 | 32 | 32 |
| Evaluation Results | Texture Immediately after Boiling | A+ | A++ | A++ | A++ | A+ | A++ |
| | Effect of Inhibiting Sogginess after Boiling | A | A+ | A++ | A | A | A |

In the table, the amount of each of the components used is expressed in "part(s) by weight".

**[Table 4]**

| | | Examples | | | | |
|---|---|---|---|---|---|---|
| | | 13 | 14 | 15 | 16 | 17 |
| All-Purpose Flour | | 95 | 95 | 95 | 95 | 95 |
| Swelling-Inhibited Starch 9 | | 5 | - | - | - | - |
| Swelling-Inhibited Starch 10 | | - | 5 | - | - | - |
| Swelling-Inhibited Starch 11 | | - | - | 5 | - | - |
| Swelling-Inhibited Starch 12 | | - | - | - | 5 | 5 |
| Wheat Protein A | | 2 | 2 | 2 | 2 | - |
| Wheat Protein B | | - | - | - | - | 2 |
| Powdered Lye | | 1 | 1 | 1 | 1 | 1 |
| Salt | | 1 | 1 | 1 | 1 | 1 |
| Water | | 32 | 32 | 32 | 32 | 32 |
| Evaluation Results | Texture Immediately after Boiling | A++ | B | A | A+ | A+ |
| | Effect of Inhibiting Sogginess after Boiling | A | A | A | A+ | B |

In the table, the amount of each of the components used is expressed in "part(s) by weight".

**[Table 5]**

| | | Examples | | | | |
|---|---|---|---|---|---|---|
| | | 18 | 19 | 20 | 21 | 22 |
| All-Purpose Flour | | 95 | 95 | 95 | 95 | 95 |
| Swelling-Inhibited Starch 13 | | 5 | - | - | - | - |
| Swelling-Inhibited Starch 14 | | - | 5 | 5 | - | - |
| Swelling-Inhibited Starch 15 | | - | - | - | 5 | - |
| Swelling-Inhibited Starch 16 | | - | - | - | - | 5 |
| Wheat Protein A | | 2 | 2 | - | 2 | 2 |
| Wheat Protein B | | - | - | 2 | - | - |
| Powdered Lye | | 1 | 1 | 1 | 1 | 1 |
| Salt | | 1 | 1 | 1 | 1 | 1 |
| Water | | 32 | 32 | 32 | 32 | 32 |
| Evaluation Results | Texture Immediately after Boiling | A+ | A++ | A++ | A | B |
| | Effect of Inhibiting Sogginess after Boiling | A+ | A++ | A | A | A |

In the table, the amount of each of the components used is expressed in "part(s) by weight".

**[Table 6]**

| | | Example 23 | Comparative Examples | | | |
|---|---|---|---|---|---|---|
| | | | 1 | 2 | 3 | 4 |
| All-Purpose Flour | | 95 | 95 | 95 | 95 | 95 |
| Swelling-Inhibited Starch 1 | | - | 5 | - | - | - |
| Swelling-Inhibited Starch 17 | | 5 | - | - | - | - |
| Non-Swelling-Inhibited Starch 1 | | - | - | 5 | 5 | - |
| Non-Swelling-Inhibited Starch 2 | | - | - | - | - | 5 |
| Wheat Protein A | | 2 | - | - | - | - |
| Wheat Protein B | | - | - | - | 2 | 2 |
| Whey Protein | | - | 2 | 2 | - | - |
| Powdered Lye | | 1 | 1 | 1 | 1 | 1 |
| Salt | | 1 | 1 | 1 | 1 | 1 |
| Water | | 32 | 32 | 32 | 32 | 32 |
| Evaluation Results | Texture Immediately after Boiling | B | B | C | C | D |
| | Effect of Inhibiting Sogginess after Boiling | B | C | C | D | D |

In the table, the amount of each of the components used is expressed in "part(s) by weight".

4. Evaluation of the Texture and the Effect of Inhibiting Sogginess after

### Boiling in Raw Pasta

In accordance with each of the compositions shown in Tables 7 to 11, powdered ingredients were introduced into a laboratory mixer, and then water was added and mixed under a reduced pressure (-700 mmHg) for 12 minutes, thus obtaining a flaky pasta dough. The dough was collected in accordance with a conventional method, compounded and rolled, and adjusted to a final noodle sheet thickness of 1.7 mm, and then the noodle sheet was cut into sliced raw noodle strings with a cutting blade (square cutter No.8). The raw noodle strings were refrigerated overnight and aged, and then boiled in a sufficient volume of boiling water for 8 minutes. The boiled noodles were tossed with a pasta sauce, and the texture of the noodles immediately after being boiled was evaluated. The texture of the noodles 5 minutes after being tossed with the pasta sauce was also evaluated as the effect of inhibiting sogginess after boiling. The texture was evaluated in accordance with the following determination criteria:

### <Criteria for Determining the Texture>

A++: excellent texture in terms of elasticity, flexibility, and smoothness.
A+: very good texture in terms of elasticity, flexibility, and smoothness.
A: good texture in terms of elasticity 1, flexibility, and smoothness.
B: rather good texture in terms of elasticity, flexibility, and smoothness.
C: ordinary texture in terms of elasticity, flexibility, and smoothness.
D: poor texture in terms of elasticity, flexibility, and smoothness.

The results are shown in Tables 7 to 11. The noodles containing a swelling-inhibited starch and whey protein (Comparative Example 5) did not provide an effect of inhibiting sogginess after boiling, although they were ordinary in terms of texture, and the noodles containing a non-swelling-inhibited starch and whey protein (Comparative Example 6) did not provide an adequate texture and effect of inhibiting sogginess after boiling. Furthermore, the noodles containing a non-swelling-inhibited starch and a wheat protein (Comparative Examples 7 and 8) did not provide a favorable texture, and also became soggy after boiling. In contrast, the noodles containing a swelling-inhibited starch and a wheat protein (Examples 24 to 46) provided a favorable texture, and were inhibited from becoming soggy after boiling. It was also revealed that the texture and the effect of inhibiting sogginess after boiling are further improved particularly in the cases using the swelling-inhibited starches subjected to a phosphate crosslinking treatment (above all, the enzymatically treated phosphate-crosslinked starches), of the swelling-inhibited starches. It was also confirmed that the effect of inhibiting sogginess after boiling is further improved in the cases using the wheat protein A (spray drying method; consistency peak arrival time: 5 minutes) of the wheat proteins, and that the texture is further improved in the cases using the wheat B (flash drying method; consistency peak arrival time: 10 minutes).

**[Table 7]**

| | | Referential Example 2 | Examples | | | | | |
|---|---|---|---|---|---|---|---|---|
| | | | 24 | 25 | 26 | 27 | 28 | 29 |
| Durum Semolina Flour | | 100 | 95 | 95 | 95 | 97.5 | 95 | 95 |
| Dry Powdered Egg Whites | | 1 | - | - | - | 0.5 | - | - |
| Swelling-Inhibited Starch 1 | | - | 5 | - | - | - | - | - |
| Swelling-Inhibited Starch 2 | | - | - | 5 | - | - | - | - |
| Swelling-Inhibited Starch 3 | | - | - | - | 5 | 2.5 | 5 | - |
| Swelling-Inhibited Starch 4 | | - | - | - | - | - | - | 5 |
| Wheat Protein A | | - | 2 | 2 | 2 | 1 | - | 2 |
| Wheat Protein B | | - | - | - | - | - | 2 | - |
| Egg Yolk Powder | | 2 | 2 | 2 | 2 | 2 | 2 | 2 |
| Salt | | 1 | 1 | 1 | 1 | 1 | 1 | 1 |
| Water | | 33 | 33 | 33 | 33 | 32 | 33 | 33 |
| Evaluation Results | Texture Immediately after Boiling | A++ | B | A | A+ | A+ | A++ | A |
| | Effect of Inhibiting Sogginess after Boiling | A++ | B | B | A++ | A++ | A+ | A |

In the table, the amount of each of the components used is expressed in "part(s) by weight".

**[Table 8]**

| | | Examples | | | | | |
|---|---|---|---|---|---|---|---|
| | | 30 | 31 | 32 | 33 | 34 | 35 |
| Durum Semolina Flour | | 95 | 95 | 97.5 | 95 | 95 | 95 |
| Dry Powdered Egg Whites | | - | - | 0.5 | - | - | - |
| Swelling-Inhibited Starch 5 | | 5 | - | - | - | - | - |
| Swelling-Inhibited Starch 6 | | - | 5 | 2.5 | 5 | - | - |
| Swelling-Inhibited Starch 7 | | - | - | - | - | 5 | - |
| Swelling-Inhibited Starch 8 | | - | - | - | - | - | 5 |
| Wheat Protein A | | 2 | 2 | 1 | - | 2 | 2 |
| Wheat Protein B | | - | - | - | 2 | - | - |
| Egg Yolk Powder | | 2 | 2 | 2 | 2 | 2 | 2 |
| Salt | | 1 | 1 | 1 | 1 | 1 | 1 |
| Water | | 33 | 33 | 32 | 33 | 33 | 33 |
| Evaluation Results | Texture Immediately after Boiling | A | A+ | A++ | A++ | A+ | A++ |
| | Effect of Inhibiting Sogginess after Boiling | A+ | A++ | A++ | A++ | A | A+ |

In the table, the amount of each of the components used is expressed in "part(s) by weight".

**[Table 9]**

| | | Examples | | | | |
|---|---|---|---|---|---|---|
| | | 36 | 37 | 38 | 39 | 40 |
| Durum Semolina Flour | | 95 | 95 | 95 | 95 | 95 |
| Swelling-Inhibited Starch 9 | | 5 | - | - | - | - |
| Swelling-Inhibited Starch 10 | | - | 5 | - | - | - |
| Swelling-Inhibited Starch 11 | | - | - | 5 | - | - |
| Swelling-Inhibited Starch 12 | | - | - | - | 5 | 5 |
| Wheat Protein A | | 2 | 2 | 2 | 2 | - |
| Wheat Protein B | | - | - | - | - | 2 |
| Egg Yolk Powder | | 2 | 2 | 2 | 2 | 2 |
| Salt | | 1 | 1 | 1 | 1 | 1 |
| Water | | 33 | 33 | 33 | 33 | 33 |
| Evaluation Results | Texture Immediately after Boiling | A++ | B | A | A+ | A++ |
| | Effect of Inhibiting Sogginess after Boiling | A | A | A | A | A |

In the table, the amount of each of the components used is expressed in "part(s) by weight".

**[Table 10]**

| | | Examples | | | | |
|---|---|---|---|---|---|---|
| | | 41 | 42 | 43 | 44 | 45 |
| Durum Semolina Flour | | 95 | 95 | 95 | 95 | 95 |
| Swelling-Inhibited Starch 13 | | 5 | - | - | - | - |
| Swelling-Inhibited Starch 14 | | - | 5 | 5 | - | - |
| Swelling-Inhibited Starch 15 | | - | - | - | 5 | - |
| Swelling-Inhibited Starch 16 | | - | - | - | - | 5 |
| Wheat Protein A | | 2 | 2 | - | 2 | 2 |
| Wheat Protein B | | - | - | 2 | - | - |
| Egg Yolk Powder | | 2 | 2 | 2 | 2 | 2 |
| Salt | | 1 | 1 | 1 | 1 | 1 |
| Water | | 33 | 33 | 33 | 33 | 33 |
| Evaluation Results | Texture Immediately after Boiling | A+ | A+ | A++ | A | B |
| | Effect of Inhibiting Sogginess after Boiling | A+ | A++ | A++ | B | A |

In the table, the amount of each of the components used is expressed in "part(s) by weight".

**[Table 11]**

| | | Example 46 | Comparative Examples | | | |
|---|---|---|---|---|---|---|
| | | | 5 | 6 | 7 | 8 |
| Durum Semolina Flour | | 95 | 95 | 95 | 95 | 95 |
| Swelling-Inhibited Starch 1 | | - | 5 | - | - | - |
| Swelling-Inhibited Starch 17 | | 5 | - | - | - | - |
| Non-Swelling-Inhibited Starch 1 | | - | - | 5 | 5 | - |
| Non-Swelling-Inhibited Starch 2 | | - | - | - | - | 5 |
| Wheat Protein A | | 2 | - | - | - | - |
| Wheat Protein B | | - | - | - | 2 | 2 |
| Whey Protein | | - | 2 | 2 | - | - |
| Egg Yolk Powder | | 2 | 2 | 2 | 2 | 2 |
| Salt | | 1 | 1 | 1 | 1 | 1 |
| Water | | 33 | 33 | 33 | 33 | 33 |
| Evaluation Results | Texture Immediately after Boiling | B | C | D | C | D |
| | Effect of Inhibiting Sogginess after Boiling | B | C | C | C | C |

In the table, the amount of each of the components used is expressed in "part(s) by weight".

### 5. Evaluation of the Texture and Adhesion during Mastication of Kamaboko Samples

In accordance with each of the compositions shown in Tables 12 and 13, fish meat (second-grade Alaska pollock) *surimi* was partially thawed, and a kneaded dough was prepared with a conventional method, using a silent cutter. The kneaded dough was degassed by vacuum packaging, and then loaded into a casing film with a lay-flat width of 45 mm. The kneaded dough was subjected to heat sterilization for 40 minutes in a boiling tank at 90 °C, and then cooled with running water. The *kamaboko* sample thus obtained was refrigerated overnight and then brought back to room temperature, and was evaluated in terms of elasticity and adhesion into the mouth during mastication. The elasticity and adhesion were evaluated in accordance with the following determination criteria:

### <Criteria for Determining the Elasticity>

A+++: excellent texture in terms of elasticity.
A++: very good texture in terms of elasticity.
A+: good texture in terms of elasticity.
A: rather good texture in terms of elasticity.
B: ordinary texture in terms of elasticity.
C: rather poor texture in terms of elasticity.
D: poor texture in terms of elasticity.

### <Criteria for Determining the Adhesion during Mastication>

A+++: excellent; free of adhesion during mastication.
A++: very good; substantially free of adhesion during mastication.
A+: good; a small degree of adhesion during mastication.
A: rather good; a rather small degree of adhesion during mastication.
B: a certain degree of adhesion during mastication.
C: a large degree of adhesion during mastication.
D: a very large degree of adhesion during mastication.

The results are shown in Tables 12 and 13. The *kamaboko* sample containing the non-swelling-inhibited starch 1 and a wheat protein (Comparative Example 9) showed a certain degree of adhesion into the mouth, although it had moderate elasticity. The *kamaboko* samples containing the non-swelling-inhibited starch 2 and a wheat protein (Comparative Examples 10 and 11) did not provide favorable results both in terms of elasticity and adhesion. In contrast, the *kamaboko* samples containing a swelling-inhibited starch and a wheat protein (Examples 1 to 4) had favorable elasticity and reduced adhesion. It was revealed that particularly *kamaboko* samples obtained using the swelling-inhibited starches subjected to a phosphate crosslinking treatment (above all, the enzymatically treated phosphate-crosslinked starches), of the swelling-inhibited starches, have a degree of adhesion equivalently small to that with frozen egg whites, and have elasticity greater than that with frozen egg whites.

**[Table 12]**

| | | Referential Example 3 | Examples | | | |
|---|---|---|---|---|---|---|
| | | | 47 | 48 | 49 | 50 |
| Fish Meat (Second-Grade Alaska Pollock) | | 100 | 100 | 100 | 100 | 100 |
| Native Wheat Starch | | 10 | 10 | 10 | 10 | 10 |
| Frozen Egg Whites | | 5 | - | - | - | - |
| Swelling-Inhibited Starch 1 | | - | 5 | - | - | - |
| Swelling-Inhibited Starch 3 | | - | - | 5 | - | - |
| Swelling-Inhibited Starch 6 | | - | - | - | 5 | 5 |
| Wheat Protein A | | - | 2 | 2 | 2 | - |
| Wheat Protein B | | - | - | - | - | 2 |
| Salt | | 3 | 3 | 3 | 3 | 3 |
| Sugar | | 3 | 3 | 3 | 3 | 3 |
| Seasonings | | 1.5 | 1.5 | 1.5 | 1.5 | 1.5 |
| Iced Water | | 50 | 50 | 50 | 50 | 50 |
| Evaluation Results | Elasticity | A | A | A+ | A++ | A+ |
| | Adhesion during Mastication | A+++ | A++ | A++ | A+++ | A++ |

In the table, the amount of each of the components used is expressed in "part(s) by weight".

**[Table 13]**

| | | Comparative Examples | | |
|---|---|---|---|---|
| | | 9 | 10 | 11 |
| Fish Meat (Second-Grade Alaska Pollock) | | 100 | 100 | 100 |
| Native Wheat Starch | | 10 | 10 | 10 |
| Non-Swelling-Inhibited Starch 1 | | 5 | - | - |
| Non-Swelling-Inhibited Starch 2 | | - | 5 | 5 |
| Wheat Protein A | | - | 2 | - |
| Wheat Protein B | | 2 | - | 2 |
| Salt | | 3 | 3 | 3 |
| Sugar | | 3 | 3 | 3 |
| Seasonings | | 1.5 | 1.5 | 1.5 |
| Iced Water | | 50 | 50 | 50 |
| Evaluation Results | Elasticity | B | B | C |
| | Adhesion during Mastication | C | B | C |

In the table, the amount of each of the components used is expressed in "part(s) by weight".

### 6. Evaluation of the Texture and Adhesion of Nuggets

Raw material meat was thawed, and minced meat was prepared with a conventional method, using a chopper. The minced meat was mixed with other components in accordance with the composition shown in Table 14, and then the mixture was preserved with salt overnight in a refrigerator, thus obtaining a kneaded dough.

**[Table 14]**

| Components | Amount Used |
|---|---|
| Chicken Breast | 50 |
| Ground Chicken | 50 |
| Salt | 1 |
| Sugar | 1.5 |
| Water | 5 |

In the table, the amount of each of the components used is expressed in "part(s) by weight".

The kneaded dough was mixed with other components in accordance with each of the compositions shown in Tables 15 and 16, molded, and frozen, and then coated with batter and fried in palm oil at 175 °C for 2 minutes, and were subsequently heated with steam at 100 °C for 5 minutes, thus obtaining nuggets. The nuggets were refrigerated overnight, and then heated in a microwave oven to achieve a central temperature of 85 °C, and the surface hardness and elasticity were evaluated. The hardness and elasticity were evaluated in accordance with the following determination criteria:

### <Criteria for Determining the Hardness>

A++: excellent in terms of surface hardness.
A+: very good in terms of surface hardness.
A: good in terms of surface hardness.
B: rather good in terms of surface hardness.
C: ordinary in terms of surface hardness.
D: poor in terms of surface hardness.

In the above-described determination criteria, the harder the surface of the nuggets, the better the result; and the softer the surface of the nuggets, the poorer the result.

### <Criteria for Determining the Elasticity>

A++: excellent elasticity.
A+: very good elasticity.
A: good elasticity.
B: rather good elasticity.
C: ordinary elasticity.
D: poor elasticity.

The results are shown in Tables 15 and 16. The nuggets containing a non-swelling-inhibited starch (Comparative Examples 12 and 13) tended to be poor in hardness and elasticity. In contrast, all the nuggets containing a swelling-inhibited starch (Examples 51 to 56) were excellent in both hardness and elasticity, and had a favorable texture. In particular, the nuggets containing the swelling-inhibited starch 3 and the wheat protein A (Example 52) had a texture equivalent to that of the nuggets containing dry powdered egg whites, in terms of hardness and elasticity, and the nuggets containing the combination of the swelling-inhibited starch 6 and the wheat protein A (Example 53) were superior in terms of hardness to the nuggets containing dry powdered egg whites.

**[Table 15]**

| | | Referential Example 1 | Examples | | | |
|---|---|---|---|---|---|---|
| | | | 51 | 52 | 53 | 54 |
| Kneaded Dough Preserved with Salt | | 107.5 | 107.5 | 107.5 | 107.5 | 107.5 |
| Dry Powdered Egg Whites | | 1.4 | - | - | - | - |
| Swelling-Inhibited Starch 1 | | - | 1.4 | - | - | 1.4 |
| Swelling-Inhibited Starch 3 | | - | - | 1.4 | - | - |
| Swelling-Inhibited Starch 6 | | - | - | - | 1.4 | - |
| Wheat Protein A | | - | 1.4 | 1.4 | 1.4 | - |
| Wheat Protein B | | - | - | - | - | 1.4 |
| Powdered Soybean Protein | | 4 | 4 | 4 | 4 | 4 |
| Bread Crumbs | | 3 | 3 | 3 | 3 | 3 |
| Acetylated Tapioca Starch | | 2 | 2 | 2 | 2 | 2 |
| Seasonings | | 2 | 2 | 2 | 2 | 2 |
| Water | | 26 | 26 | 26 | 26 | 26 |
| Evaluation Results | Hardness | A+ | A | A+ | A++ | A |
| | Elasticity | A++ | A+ | A++ | A++ | A |

In the table, the amount of each of the components used is expressed in "part(s) by weight".

**[Table 16]**

| | | Examples | | Comparative Examples | |
|---|---|---|---|---|---|
| | | 55 | 56 | 12 | 13 |
| Kneaded Dough Preserved with Salt | | 107.5 | 107.5 | 107.5 | 107.5 |
| Swelling-Inhibited Starch 3 | | 1.4 | - | - | - |
| Swelling-Inhibited Starch 6 | | - | 1.4 | - | - |
| Non-Swelling-Inhibited Starch 2 | | - | - | 1.4 | 1.4 |
| Wheat Protein A | | - | - | 1.4 | - |
| Wheat Protein B | | 1.4 | 1.4 | - | 1.4 |
| Powdered Soybean Protein | | 4 | 4 | 4 | 4 |
| Bread Crumbs | | 3 | 3 | 3 | 3 |
| Acetylated Tapioca Starch | | 2 | 2 | 2 | 2 |
| Seasonings | | 2 | 2 | 2 | 2 |
| Water | | 26 | 26 | 26 | 26 |
| Evaluation Results | Hardness | A+ | A++ | D | D |
| | Elasticity | A+ | A+ | C | D |

In the table, the amount of each of the components used is expressed in "part(s) by weight".

## Claims

1. A composition for improving food texture comprising a swelling-inhibited starch and wheat protein.

2. The composition for improving food texture according to claim 1, wherein the swelling-inhibited starch is a crosslinked starch and/or a heat-moisture-treated starch.

3. The composition for improving food texture according to claim 1 or 2, wherein the swelling-inhibited starch is a phosphate-crosslinked starch.

4. The composition for improving food texture according to any of claims 1 to 3, wherein the swelling-inhibited starch is a phosphate-crosslinked starch that has undergone an enzymatic degradation treatment.

5. The composition for improving food texture according to any of claims 1 to 4, wherein the wheat protein is vital gluten obtained using spray drying and/or flash drying.

6. The composition for improving food texture according to any of claims 1 to 5, which comprises 0.5 to 99.5 parts by weight of the wheat protein per 100 parts by weight of the swelling-inhibited starch.

7. The composition for improving food texture according to any of claims 1 to 6, which is used for improving the texture of noodles, a seafood paste product, or a meat paste product.

8. A food comprising a swelling-inhibited starch and wheat protein.

9. The food according to claim 8, which is noodles, a seafood paste product, or a meat paste product.

10. Use of a food ingredient comprising a swelling-inhibited starch and wheat protein, for improving food texture.
